# EUROPÄISCHE PATENTSCHRIFT

(11) **EP 2 858 736 B1**
(45) Veröffentlichungstag und Bekanntmachung des Hinweises auf die Patenterteilung: **28.12.2016**
(21) Anmeldenummer: 13727516.0
(22) Anmeldetag: 22.05.2013
(51) Int. Cl.: B01D 46/00, B01D 46/02

(54) **FILTERELEMENT MIT FILTERTASCHEN**
FILTER ELEMENT WITH FILTER POCKETS
ÉLÉMENT FILTRANT AVEC POCHES FILTRANTES

(30) Priorität: 11.06.2012 DE 102012011347
(43) Veröffentlichungstag der Anmeldung: 15.04.2015
(73) Patentinhaber: Carl Freudenberg KG, 69469 Weinheim (DE)
(72) Erfinder: CAESAR, Thomas, 69469 Weinheim (DE); STIBORSKY, Mark, 69469 Weinheim (DE); MANSTEIN, Heiko, 67346 Speyer (DE); GRUNZ, Steffen, 68549 Ilvesheim (DE)
(86) Internationale Anmeldenummer: PCT/EP2013/001511
(87) Internationale Veröffentlichungsnummer: WO 2013/185878

(56) Entgegenhaltungen:
- WO-A1-99/33544
- DE-U1- 9 406 822

## Beschreibung

### Technisches Gebiet

Die Erfindung betrifft ein Filterelement gemäß dem Oberbegriff des Patentanspruchs 1.

### Stand der Technik

Die DE 94 06 822 U1 offenbart einen Taschenluftfilter, bei dem sich zwischen den Einzeltaschen Gitterkörper befinden, wodurch eine gegenseitige Berührung und Behinderung der Einzeltaschen vermieden wird. Die WO 99/33544 A1 offenbart einen Taschenfilter, bei welchem anströmseitig Fluidführungselemente angeordnet sind.

Aus der DE 20 2008 006 834 U1 ist bereits ein Filterelement bekannt, welches einen Rahmen und mit diesem verbundene sackartige Filtertaschen umfasst, wobei die Filtertaschen anströmseitig Öffnungen zum Eintreten eines zu filternden Fluids in deren Innenräume aufweisen und wobei sich die Innenräume in Richtung einer Abströmseite verjüngen.

Ein weiterer Taschenfilter mit Rahmen ist in der WO 99/33544 offenbart. Der Rahmen weist anströmseitige Fluidführungselemente in Form von bogenförmigen Leitblechen auf.

Filterelemente dieser Art finden in der industriellen Luftfiltration als sogenannte Taschenfilter Verwendung. Diese Verwendung ist lediglich beispielhaft genannt.

Die zu filternde Luft tritt über die Öffnungen in die sackartigen Filtertaschen ein und tritt abströmseitig auf einer Seite, welche den Öffnungen abgewandt ist, aus den Filtertaschen wieder aus. Dabei durchströmt die Luft die Wandungen der Filtertaschen, welche üblicherweise aus Vliesstoffen gefertigt sind. Vliesstoffe sind hier lediglich beispielhaft genannt. Neben Vliesstoffen sind auch andere Gas oder Partikel zurückhaltende Materialien denkbar.

Beim Durchströmen der Wandungen wird die Luft gefiltert. Die Filtertaschen sind im Wesentlichen V-förmig ausgebildet und ragen mit ihren spitzen Enden von einem Kranz eines Rahmens ab.

Im Bereich der spitzen Enden oder Kanten bildet sich ein Strömungsfeld aus, welches im Wesentlichen durch die Geschwindigkeit, mit der die Luft in die Filtertaschen eintritt bzw. aus diesen austritt, bestimmt wird.

In ungünstiger Weise können sich in diesem Strömungsfeld Verwirbelungen ausbilden. Diese Verwirbelungen führen zu einem unerwünschten Druckverlust am Filterelement. Unter Druckverlust wird die Differenz des statischen Drucks anströmseitig, also vor den Öffnungen, und des statischen Drucks auf der Abströmseite verstanden. Dieser Druckverlust kann bis zu 50 % betragen. Der Druckverlust gemäß dieser Beschreibung wird nach DIN EN 779 gemessen.

Im Strömungsfeld können durch die Verwirbelungen hohe Reibungsverluste auftreten. Diese führen zu einem Energieverlust und damit zum Druckverlust.

### Darstellung der Erfindung

Der Erfindung liegt daher die Aufgabe zugrunde, ein leistungsfähiges Filterelement anzugeben, bei welchem das zu filternde Fluid effektiv gereinigt wird.

Die vorliegende Erfindung löst die zuvor genannte Aufgabe durch die Merkmale des Patentanspruchs 1.

In der Fachwelt herrschte bisher die Ansicht, dass abströmseitig keine besonders ausgeprägten Wirbelstraßen entstehen, da Luft an den Filtertaschen bzw. an deren Wandungen entlang strömen würde. Daher wurde bisher der Rahmen auf der Anströmseite aerodynamisch optimiert, um dort Reibungsverluste zu minimieren.

Es ist aber im Rahmen der Erfindung erkannt worden, dass Strömungsprobleme, welche einen wesentlichen Druckverlust verursachen, eher abströmseitig auftreten. Die Druckverluste auf der Anströmseite sind als eher gering einzustufen. Erfindungsgemäß sind daher auf der Abströmseite oder auf der Abströmseite und der Anströmseite der Filtertaschen Fluidführungselemente angeordnet.

Erfindungsgemäß ist zunächst erkannt worden, dass Fluidführungselemente abströmseitig angeordnet werden können. Darauf ist erkannt worden, dass die Fluidführungselemente strömungsführend wirken und auf der Abströmseite Verwirbelungen zumindest teilweise auflösen. Überraschend wird hierdurch der Druckverlust zwischen Anströmseite und Abströmseite reduziert. Erfindungsgemäß ist weiter erkannt worden, dass Fluidführungselemente anströmseitig und abströmseitig angeordnet werden können.

Insbesondere ist erkannt worden, dass die Fluidführungselemente strömungsführend wirken und auf der Abströmseite Verwirbelungen zumindest teilweise auflösen. Überraschend wird hierdurch der Druckverlust zwischen Anströmseite und Abströmseite reduziert.

Folglich ist ein leistungsfähiges Filterelement angegeben, bei welchem das zu filternde Fluid effektiv gereinigt wird.

Unter einer effektiven Reinigung wird eine Reinigung des Fluids verstanden, die mit möglichst geringem energetischen Aufwand durchführbar ist.

Folglich ist die eingangs genannte Aufgabe gelöst.

Unter sackartigen Filtertaschen im Sinne dieser Beschreibung werden nicht nur spitz oder kegelstumpfartig zulaufende Filtertaschen, sondern auch wellenförmig verlaufende oder U-förmige sackartige Filtertaschen verstanden. Die sackartigen Filtertaschen können steif ausgebildet sein.

Die Fluidführungselemente könnten zumindest teilweise gekrümmt oder bogenförmig ausgebildet sein. Hierdurch können Verwirbelungen wirksam eingeschränkt oder verhindert werden.

Die Fluidführungselemente könnten im Querschnitt zumindest teilweise kreisförmig ausgebildet sein. Überraschend haben sich kreisförmige oder röhrenförmige Fluidführungselemente, welche sich an die spitzen Enden der Filtertaschen anschließen, als geeignet erwiesen, Verwirbelungen aufzulösen.

Die Fluidführungselemente könnten als Luftleitbleche ausgebildet sein. Luftleitbleche weisen ein geringes Gewicht auf und können leicht derart geformt werden, dass sie Verwirbelungen auflösen.

Die Luftleitbleche können aus Kunststoff, Metall und/ oder einem anderen Werkstoff gefertigt sein. Der andere Werkstoff kann Holz oder Beton umfassen. Die Luftleitbleche können auch aus einem Werkstoffverbund bestehen.

Die Fluidführungselemente könnten als separate Bauteile ausgestaltet sein, welche vom Filterelement abnehmbar oder mit diesem verbindbar sind. Solche Fluidführungselemente können mit dem Rahmen verrastbar oder verclipsbar sein.

Vor diesem Hintergrund ist denkbar, dass die Fluidführungselemente am Rahmen oder getrennt vom Rahmen als separate Bauteile angeordnet sind. Hierdurch sind die Fluidführungselemente mit dem Filterelement einerseits verliersicher verbindbar, andererseits können die Fluidführungselemente auch modular mit bereits bestehenden Filterelementen des Stands der Technik kombiniert werden.

Erste Fluidführungselemente könnten an den abströmseitigen Enden der Filtertaschen angeordnet sein und zweite Fluidführungselemente könnten zwischen den Wandungen und/oder zwischen den abströmseitigen Enden der Filtertaschen als separate Bauteile angeordnet sein. Durch diese Maßnahmen können Verwirbelungen effektiv reduziert werden, die sich zwischen den Wandungen der Filtertaschen bilden.

Die Fluidführungselemente und der Rahmen könnten einstückig und/ oder materialeinheitlich ausgebildet sein. Hierdurch ist die Einheit aus Rahmen und Fluidführungselementen leicht herstellbar und sortenrein recyclebar oder entsorgbar.

Vor diesem Hintergrund ist denkbar, dass erste Fluidführungselemente materialeinheitlich und/oder einstückig mit dem Rahmen ausgebildet sind, wobei zweite Fluidführungselemente als separate Bauteile angeordnet sind.

Die Fluidführungselemente könnten zur anströmseitigen Oberkante des Rahmens einen Abstand von höchstens 5d einhalten, wobei d die Strecke repräsentiert, die von der anströmseitigen Oberkante zum abströmseitigen Ende der Filtertaschen verläuft. Hierdurch ist sichergestellt, dass die Fluidführungselemente noch ausreichend Einfluss auf Turbulenzen nehmen und diese reduzieren können. Die Fluidführungselemente sind jedoch minimal 0,1d von der anströmseitigen Oberkante des Rahmens beabstandet. Der Wert 5d nimmt bevorzugt den Wert 1,5 m an.

Die Filtertaschen könnten gefaltete Wandungen aufweisen, wobei die Wandungen eine Plissierung aufweisen. Durch die Falten bzw, Plissierungen wird die effektive Filterfläche des Filterelements erhöht. Überdies wird die Verwindungssteifigkeit einer Filtertasche erhöht. Solche Elemente sind in der Luftfiltration als Kassettenfilter bekannt.

Eine Wandung einer Filtertasche könnte durch ein flaches Filterelement gebildet sein. Durch diese konkrete Ausgestaltung können zur Bildung einer Filtertasche zwei flache gefaltete Filterelemente, sogenannte Flachfilter oder Paneifilter, verwendet werden. Die flachen Filterelemente können an einem Ende mit dem Rahmen verbunden werden. Einige oder alle Fluidführungselemente können dann oder zuvor mit den anderen Enden der flachen Filterelemente oder zwischen diesen angeordnet werden.

Ein Modul, welches Fluidführungselemente umfasst, könnte zur Herstellung eines Filterelements der hier beschriebenen Art verwendet werden. Hierdurch ist es möglich, bereits bestehende Filterelemente ohne Fluidführungselemente derart mit Fluidführungselementen auszurüsten, dass eine effektive Fluidreinigung ermöglicht wird.

Das Modul kann als Nachrüstbauteil oder Nachrüstbausatz angeboten und geliefert werden.

Durch die Fluidführungselemente wird vermieden, dass Turbulenzen entstehen. Turbulenzen bewirken Druckdifferenzen, Kondensationseffekte und Geräuschentwicklung.

Filterelemente der hier beschriebenen Art finden in der Luftfiltration, insbesondere in der Zuluftfiltration von Turbomaschinen oder in der Raumlufttechnik, Verwendung.

### Kurzbeschreibung der Zeichnung

In der Zeichnung zeigen
- Fig. 1: ein als Taschenfilter ausgebildetes Filterelement des Stands der Technik,
- Fig. 2: ein als Taschenfilter ausgebildetes Filterelement des Stands der Technik nebst einem abströmseitig verwirbelten Strömungsfeld,
- Fig. 3: eine schematische Ansicht eines Filterelements, welches röhrenförmige Fluidführungselemente aufweist,
- Fig. 4: eine schematische Ansicht eines weiteren Filterelements, welches Fluidführungselemente aufweist, die als Luftleitbleche ausgestaltet sind,
- Fig. 5: eine schematische Ansicht eines Filterelements, welches röhrenförmige Fluidführungselemente aufweist, die einstückig mit dem Rahmen ausgebildet sind,
- Fig. 6: eine schematische Ansicht eines weiteren Filterelements, welches erste Fluidführungselemente aufweist, die tropfenförmig ausgestaltet sind, und weitere separate Fluidführungselemente, die zwischen den ersten Fluidführungselementen angeordnet sind, und
- Fig. 7: eine Ansicht eines weiteren Filterelements, dessen Rahmen flache plissierte Filterelemente zugeordnet sind, welche die Filtertaschen ausbilden, wobei erste Fluidführungselemente vorgesehen sind, die tropfenförmig ausgestaltet sind, und wobei weitere separate Fluidführungselemente vorgesehen sind, die zwischen den ersten Fluidführungselementen angeordnet sind.

### Ausführung der Erfindung

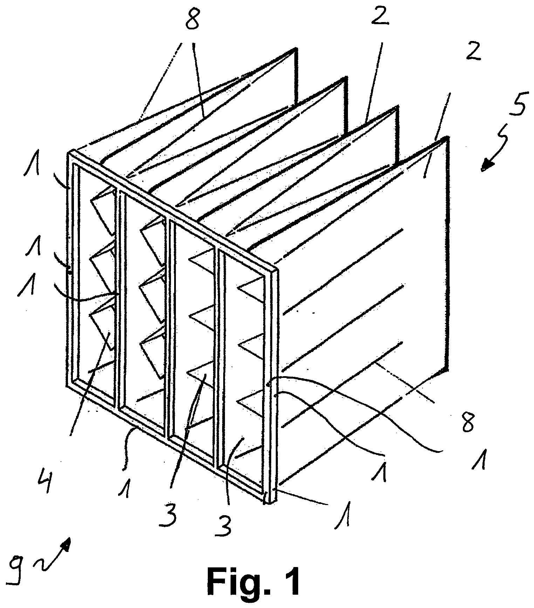

Fig. 1 zeigt ein Filterelement des Stands der Technik, umfassend einen Rahmen 1 und mit diesem verbundene sackartige Filtertaschen 2, wobei die Filtertaschen 2 anströmseitig Öffnungen 3 zum Eintreten eines zu filternden Fluids in deren Innenräume 4 aufweisen und wobei sich die Innenräume 4 in Richtung einer Abströmseite 5 verjüngen.

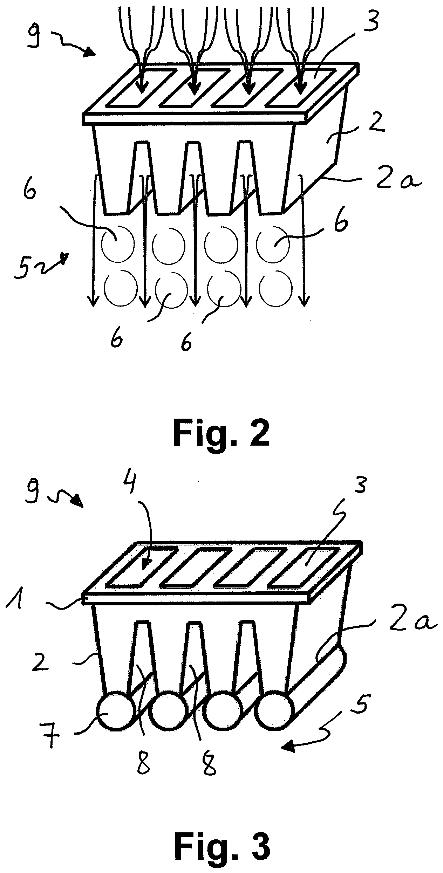

Fig. 2 zeigt, dass sich auf der Abströmseite 5 eines Filterelements des Stands der Technik Verwirbelungen 6 ausbilden. Die Verwirbelungen 6 bilden sich unterhalb der spitzen Enden oder Kanten der Filtertaschen 2 und führen zu einem unerwünschten Druckverlust zwischen Anströmseite 9 und Abströmseite 5.

Fig. 3 zeigt ein Filterelement gemäß der Erfindung, bei welchem auf der Abströmseite 5 der Filtertaschen 2 Fluidführungselemente 7 angeordnet sind.

Die Fluidführungselemente 7 sind im Querschnitt teilweise kreisförmig ausgebildet. Konkret sind die Fluidführungselemente 7 als Röhren oder röhrenartig ausgestaltet und schließen sich an die spitzen Enden der Filtertaschen 2 an.

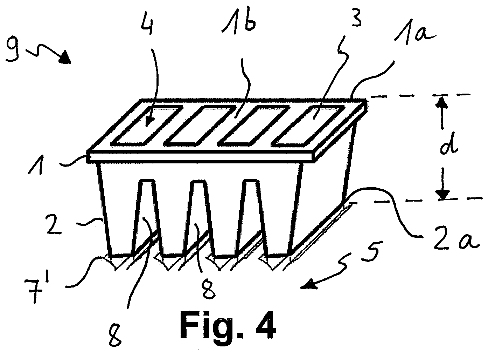

Fig. 4 zeigt ein weiteres Filterelement gemäß der Erfindung, bei welchem auf der Abströmseite 5 der Filtertaschen 2 Fluidführungselemente 7' angeordnet sind.

Die Fluidführungselemente 7' sind als Luftleitbleche ausgebildet. Die Luftleitbleche sind in Richtung der Abströmseite 5 konkav ausgebildet. Jeder Filtertasche 2 sind je zwei Luftleitbleche zugeordnet.

Die Fluidführungselemente 7, 7' können auch als separate Bauteile ausgestaltet sein, welche vom Filterelement abnehmbar oder mit diesem verbindbar sind. Die Fluidführungselemente 7, 7' sind am Rahmen 1 angeordnet, könnten aber auch von diesem getrennt angeordnet sein.

Die Filtertaschen 2 weisen gefaltete Wandungen 8 auf, wobei die Wandungen 8 eine Plissierung aufweisen. Die Filtertaschen 2 sind aus Vliesstoff gefertigt.

In Fig. 4 ist gezeigt, dass die Fluidführungselemente 7' zur anströmseitigen Oberkante 1a des Rahmens 1 einen Abstand von höchstens 5d einhalten, wobei d die Strecke repräsentiert, die von der anströmseitigen Oberkante 1 a zum abströmseitigen Ende 2a der Filtertaschen 2 verläuft. Die Strecke verläuft orthogonal zur Anströmebene 1 b, die der Rahmen 1 aufspannt.

Diese Beabstandung ist analog auch bei den Filterelementen der Fig. 3 und 5 bis 7 möglich.

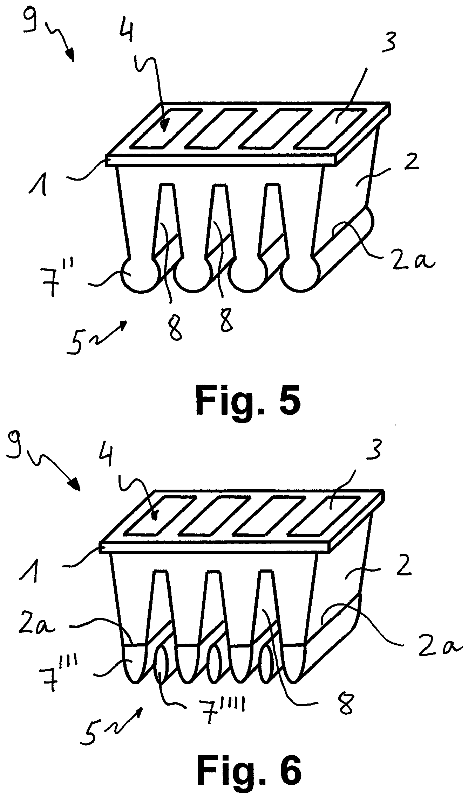

Fig. 5 zeigt ein Filterelement gemäß der Erfindung, bei welchem auf der Abströmseite 5 der Filtertaschen 2 Fluidführungselemente 7" angeordnet sind. Diese Fluidführungselemente 7" sind einstückig mit dem Rahmen 1 verbunden.

Die Fluidführungselemente 7" sind im Querschnitt teilsweise kreisförmig ausgebildet. Konkret sind die Fluidführungselemente 7" als Röhren oder röhrenartig ausgestaltet und schließen sich an die spitzen oder stumpfen Enden 2a der Filtertaschen 2 an.

Fig. 6 zeigt ein Filterelement gemäß der Erfindung, bei welchem auf der Abströmseite 5 der Filtertaschen 2 Fluidführungselemente 7"', 7"" angeordnet sind.

Erste Fluidführungselemente 7'" sind an den Enden 2a der Filtertaschen 2 befestigt. Die ersten Fluidführungselemente 7"' sind im Querschnitt zumindest teilweise oder vollständig tropfenförmig ausgestaltet.

Zweite Fluidführungselemente 7"" sind zwischen den ersten Fluidführungselementen 7'" als separate Bauteile positioniert.

Die zweiten Fluidführungselemente 7"" sind im Querschnitt oval oder ellipsenförmig ausgestaltet.

Erste Fluidführungselemente 7'" sind an den abströmseitigen Enden 2a der Filtertaschen 2 angeordnet und zweite Fluidführungselemente 7"" sind zwischen den Wandungen 8 und zwischen den abströmseitigen Enden 2a der Filtertaschen 2 als separate Bauteile angeordnet.

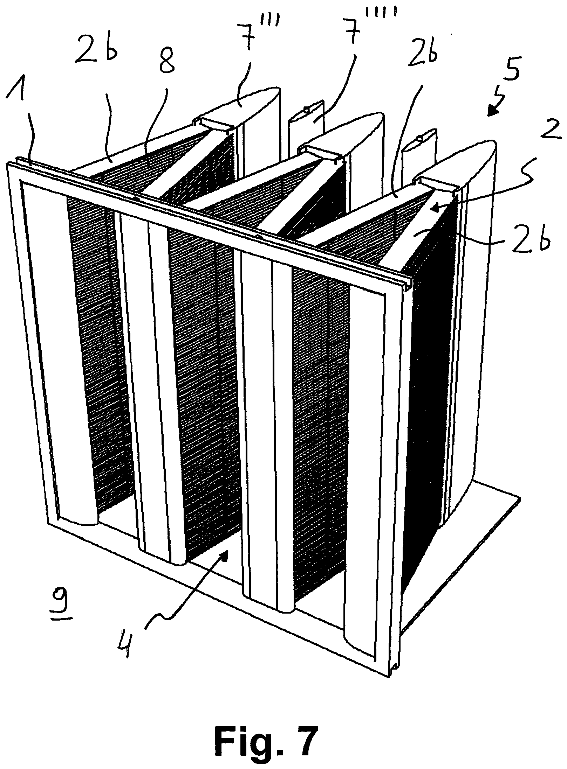

Fig. 7 zeigt ein Filterelement gemäß der Erfindung, bei welchem auf der Abströmseite 5 der Filtertaschen 2 Fluidführungselemente 7'", 7"" angeordnet sind.

Eine Wandung 8 einer Filtertasche 2 wird durch ein flaches Filterelement 2b gebildet, welches unter einem spitzen Winkel gegen ein anderes Filterelement 2b geneigt am Rahmen 1 angeordnet ist.

Die flachen Filterelemente 2b sind gefaltet, aus Vliesstoff gefertigt und bilden die Wandungen 8 der Filtertasche 2 aus.

Insoweit weisen die Filtertaschen 2 gefaltete Wandungen 8 auf, wobei die Wandungen 8 eine Plissierung aufweisen.

Erste Fluidführungselemente 7"' sind an den Enden der Filtertaschen 2 befestigt. Die ersten Fluidführungselemente 7'" sind im Querschnitt tropfenförmig ausgestaltet.

Zweite Fluidführungselemente 7"" sind zwischen den ersten Fluidführungselementen 7'" als separate Bauteile positioniert.

Die zweiten Fluidführungselemente 7"" sind im Querschnitt oval oder ellipsenförmig ausgestaltet.

Mit Bezug auf die Figuren 3 bis 7 sei an dieser Stelle ausgeführt, dass spitze Enden 2a oder Kanten auch abgerundet, kegelstumpfartig oder abgeplattet ausgebildet sein können, soweit sie sich in Abströmrichtung verjüngen. Die Fluidführungselemente 7, 7', 7", 7'", 7"" erstrecken sich längs dieser Enden 2a bzw. parallel zu diesen. Die Fluidführungselemente 7, 7', 7", 7"', 7"" sind als längliche Körper ausgestaltet.

## Patentansprüche

1. Filterelement, umfassend einen Rahmen (1) und mit diesem verbundene sackartige Filtertaschen (2), wobei die Filtertaschen (2) anströmseitig Öffnungen (3) zum Eintreten eines zu filternden Fluids in deren Innenräume (4) aufweisen und wobei sich die Innenräume (4) in Richtung einer Abströmseite (5) verjüngen,
**dadurch gekennzeichnet, dass** auf der Abströmseite (5) der Filtertaschen (2) Fluidführungselemente (7, 7', 7", 7"', 7"") angeordnet sind, oder dass auf der Abströmseite (5) und der Anströmseite (9) der Filtertaschen (2) Fluidführungselemente (7, 7', 7", 7"', 7"") angeordnet sind.

2. Filterelement nach Anspruch 1, **dadurch gekennzeichnet, dass** die Fluidführungselemente (7, 7', 7", 7"', 7"") zumindest teilweise gekrümmt oder bogenförmig ausgebildet sind.

3. Filterelement nach Anspruch 1 oder 2, **dadurch gekennzeichnet, dass** die Fluidführungselemente (7, 7', 7", 7"', 7"") im Querschnitt zumindest teilweise kreisförmig ausgebildet sind.

4. Filterelement nach einem der voranstehenden Ansprüche, **dadurch gekennzeichnet, dass** die Fluidführungselemente (7, 7') als Luftleitbleche ausgebildet sind.

5. Filterelement nach einem der voranstehenden Ansprüche, **dadurch gekennzeichnet, dass** die Fluidführungselemente (7, 7', 7", 7"', 7"") als separate Bauteile ausgestaltet sind, welche vom Filterelement abnehmbar oder mit diesem verbindbar sind.

6. Filterelemente nach einem der voranstehenden Ansprüche, **dadurch gekennzeichnet, dass** die Fluidführungselemente (7, 7', 7", 7"', 7"") am Rahmen (1) und/ oder getrennt vom Rahmen (1) als separate Bauteile angeordnet sind.

7. Filterelement nach einem der voranstehenden Ansprüche, **dadurch gekennzeichnet, dass** erste Fluidführungselemente (7, 7', 7", 7"') an den abströmseitigen Enden (2a) der Filtertaschen (2) angeordnet sind und zweite Fluidführungselemente (7"") zwischen den Wandungen (8) und/ oder zwischen den abströmseitigen Enden (2a) der Filtertaschen (2) als separate Bauteile angeordnet sind.

8. Filterelement nach einem der Ansprüche 1 bis 4, **dadurch gekennzeichnet, dass** die Fluidführungselemente (7, 7', 7", 7"') und der Rahmen (1) einstückig und/ oder materialeinheitlich ausgebildet sind.

9. Filterelement nach einem der voranstehenden Ansprüche, **dadurch gekennzeichnet, dass** die Fluidführungselemente (7, 7', 7", 7"', 7"") zur anströmseitigen Oberkante (1a) des Rahmens (1) einen Abstand von höchstens 5d einhalten, wobei d die Strecke repräsentiert, die von der anströmseitigen Oberkante (1a) zum abströmseitigen Ende (2a) der Filtertaschen (2) verläuft.

10. Filterelement nach einem der voranstehenden Ansprüche, **dadurch gekennzeichnet, dass** die Filtertaschen (2) gefaltete Wandungen (8) aufweisen, wobei die Wandungen (8) eine Plissierung aufweisen.

11. Filterelement nach Anspruch 10, **dadurch gekennzeichnet, dass** eine Wandung (8) einer Filtertasche (2) durch ein flaches Filterelemente (2b) gebildet ist.

## Claims

1. Filter element comprising a frame (1) and bag-like filter pockets (2) connected thereto, wherein the filter pockets (2), on the inflow side, have openings (3) so that a fluid which is to be filtered can enter into the interior spaces (4) of the filter pockets, and wherein the interior spaces (4) taper in the direction of an outflow side (5),
**characterized in that** fluid-guiding elements (7, 7', 7'', 7''', 7'''') are arranged on the outflow side (5) of the filter pockets (2), or **in that** fluid-guiding elements (7, 7', 7'', 7''', 7'''') are arranged on the outflow side (5) and on the inflow side (9) of the filter pockets (2).

2. Filter element according to Claim 1, **characterized in that** the fluid-guiding elements (7, 7', 7'', 7''', 7'''') are of at least partially curved or arcuate form.

3. Filter element according to Claim 1 or 2, **characterized in that** the fluid-guiding elements (7, 7', 7'', 7''', 7'''') are at least partially circular in cross section.

4. Filter element according to one of the preceding claims, **characterized in that** the fluid-guiding elements (7, 7') are designed as air baffle plates.

5. Filter element according to one of the preceding claims, **characterized in that** the fluid-guiding elements (7, 7', 7'', 7''', 7'''') are configures as separate components which can be removed from the filter element or can be connected to the same.

6. Filter element according to one of the preceding claims, **characterised in that** the fluid-guiding elements (7, 7', 7'', 7''', 7'''') are arranged as separate components on the frame (1) and/or separately from the frame (1).

7. Filter element according to one of the preceding claims, **characterized in that** first fluid-guiding elements (7, 7', 7"', 7''') are arranged at the outflow-side ends (2a) of the filter pockets (2) and second fluid-guiding elements (7'''') are arranged as separate components between the walls (8) and/or between the outflow-side ends (2a) of the filter pockets (2).

8. Filter element according to one of Claims 1 to 4, **characterized in that** the fluid-guiding elements (7, 7', 7'', 7''') and the frame (1) are formed in one piece and/or in materially integral fashion.

9. Filter element according to one of the preceding claims, **characterized in that** the fluid-guiding elements (7, 7', 7'', 7''', 7'''') maintain a spacing of at most 5d to the inflow-side upper edge (1a) of the frame (1), wherein d represents the distance from the inflow-side upper edge (1a) to the outflow-side end (2a) of the filter pockets (2).

10. Filter element according to one of the preceding claims, **characterized in that** the filter pockets (2) have folded walls (8), wherein the walls (8) have pleating.

11. Filter element according to Claim 10, **characterized in that** a wall (8) of a filter pocket (2) is formed by a flat filter element (2b).

## Revendications

1. Elément filtrant, comprenant un cadre (1) et des poches filtrantes (2) en forme de sac repliées à celui-ci, dans lequel les poches filtrantes (2) présentent à l'entrée des ouvertures (3) permettant l'entrée d'un fluide à filtrer dans leurs espaces intérieurs (4) et dans lequel les espaces intérieurs (4) se rétrécissent en direction d'un côté de sortie (5), **caractérisé en ce que** des éléments de guidage de fluide (7, 7', 7", 7"', 7"") sont disposés sur le côté de sortie (5) des poches filtrantes (2), ou **en ce que** des éléments de guidage de fluide (7, 7', 7", 7"', 7"") sont disposés sur le côté de sortie (5) et sur le côté d'entrée (9) des poches filtrantes (2).

2. Elément filtrant selon la revendication 1, **caractérisé en ce que** les éléments de guidage de fluide (7, 7', 7", 7'", 7"") sont au moins partiellement incurvés ou en forme d'arc.

3. Elément filtrant selon la revendication 1 ou 2, **caractérisé en ce que** les éléments de guidage de fluide (7, 7', 7", 7"', 7"") sont au moins partiellement circulaires en section transversale.

4. Elément filtrant selon l'une quelconque des revendications précédentes, **caractérisé en ce que** les éléments de guidage de fluide (7, 7') sont réalisés sous forme de déflecteurs d'air.

5. Elément filtrant selon l'une quelconque des revendications précédentes, **caractérisé en ce que** les éléments de guidage de fluide (7, 7', 7", 7"', 7"") sont réalisés comme composants séparés, qui peuvent être détachés de l'élément filtrant ou assemblés à celui-ci.

6. Elément filtrant selon l'une quelconque des revendications précédentes, **caractérisé en ce que** les éléments de guidage de fluide (7, 7', 7", 7'", 7"") sont disposés sur le cadre (1) et/ou séparément du cadre (1) en tant que composants séparés.

7. Elément filtrant selon l'une quelconque des revendications précédentes, **caractérisé en ce que** des premiers éléments de guidage de fluide (7, 7', 7", 7"') sont disposés aux extrémités de sortie (2a) des poches filtrantes (2) et des deuxièmes éléments de guidage de fluide (7"") sont disposés entre les parois (8) et/ou entre les extrémités de sortie (2a) des poches filtrantes (2) en tant que composants séparés.

8. Elément filtrant selon l'une quelconque des revendications 1 à 4, **caractérisé en ce que** les éléments de guidage de fluide (7, 7', 7", 7"') et le cadre (1) sont réalisés d'une seule pièce et/ou en unité de matière.

9. Elément filtrant selon l'une quelconque des revendications précédentes, **caractérisé en ce que** les éléments de guidage de fluide (7, 7', 7", 7"', 7"") respectent une distance de 5d au maximum par rapport à l'arête supérieure d'entrée (1a) du cadre (1), dans lequel d représente la distance qui court de l'arête supérieure d'entrée (1a) jusqu'à l'extrémité de sortie (2a) des poches filtrantes (2).

10. Elément filtrant selon l'une quelconque des revendications précédentes, **caractérisé en ce que** les poches filtrantes (2) présentent des parois pliées (8), dans lequel les parois (8) présentent un plissage.

11. Elément filtrant selon la revendication 10, **caractérisé en ce qu'**une paroi (8) d'une poche filtrante (2) est formée par un élément filtrant plat (2b).
